Europäisches Patentamt

European Patent Office

Office européen des brevets

(19)

(11) Veröffentlichungsnummer : **0 364 505 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **G01B 21/22**

(21) Anmeldenummer : **89900129.1**

(22) Anmeldetag : **18.11.88**

(86) Internationale Anmeldenummer :
**PCT/EP88/01048**

(87) Internationale Veröffentlichungsnummer :
**WO 89/05438 15.06.89 Gazette 89/13**

(54) **WINKELSENSORELEMENT.**

(30) Priorität : **10.12.87 DE 3741821**

(43) Veröffentlichungstag der Anmeldung :
**25.04.90 Patentblatt 90/17**

(45) Bekanntmachung des Hinweises auf die
Patenterteilung :
**25.03.92 Patentblatt 92/13**

(84) Benannte Vertragsstaaten :
**AT BE CH DE FR GB IT LI LU NL SE**

(56) Entgegenhaltungen :
**DE-A- 2 928 155**
**GB-A- 2 065 897**
**US-A- 4 347 748**
**US-A- 4 627 297**

(73) Patentinhaber : **Messerschmitt-Bölkow-Blohm
Gesellschaft mit beschränkter Haftung
Robert-Koch-Strasse
W-8012 Ottobrunn (DE)**

(72) Erfinder : **PFEIFFER, Walter
Rossbergweg 2
W-7401 Pliezhausen (DE)**
Erfinder : **LAUCHT, Horst
Hermann-Löns-Weg 16
W-8206 Bruckmühl (DE)**
Erfinder : **SPIES, Hans
Schieszstätte 12
W-8068 Pfaffenhofen (DE)**

EP 0 364 505 B1

## Beschreibung

Die Erfindung bezieht sich auf ein Winkelsensorelement gemäß dem Gattungsbegriff des Anspruchs 1.

Winkelsensorelemente sind an sich in den verschiedensten Ausführungsformen bekannt. Diese bekannten Ausführungsformen besitzen in der Regel jedoch nur eine Eindeutigkeit auf eine einzige Umdrehung oder sogar nur auf einen kleineren Winkelbereich. Für Winkelmessungen oder -kodierungen, beispielsweise der Lenkwinkel von Kraftfahrzeugen, ist aber eine Messung über mehrere Umdrehungen unter Beibehaltung einer zuverlässigen Eindeutigkeit erforderlich. Freilich handelt es sich hier nur um wenige Umdrehungen, aber auch hierfür läßt sich das Problem der Eindeutigkeit bisher nur durch elektronische Kodierung der Umdrehungsnummer lösen oder durch Einsatz eines spielfreien mechanischen Getriebes. Im ersten Fall ist zumindest der Einsatz einer Pufferbatterie erforderlich und im zweiten Fall ist der mechanische und materielle Aufwand relativ sehr hoch.

Der Erfindung liegt die Aufgabe zugrunde, ein Winkelsensorelement der eingangs genannten Art zu schaffen, das eine aufwandslose, jedoch zuverlässige Untersetzung einer Drehbewegung für Meßbereiche von wenigen Umdrehungen erlaubt.

Diese Aufgabe wird durch die im Anspruch 1 aufgeführten Maßnahmen gelöst. In den abhängigen ansprüchen sind Ausgestaltungen und Weiterbildungen aufgezeigt und in der nachfolgenden Beschreibung sind Ausführungsbeispiele erläutert und in den Figuren der Zeichnung skizziert. Es zeigen:

Fig. 1 ein Schemabild einer elastischen Untersetzung in Form eines Torsionsstabes mit einem Abgriff, der in einem Untersetzungsverhältnis von 1 : 4 angeordnet ist,

Fig. 2 eine perspektivische Skizze eines torsionselastischen und gleichzeitig biegesteifen Torsionsstabes,

Fig. 3 eine Schemaskizze eines Ausführungsbeispiels für ein torsionselastisches Element in Form einer Schraubenfeder,

Fig. 4 eine Schemaskizze eines Ausführungsbeispiels für ein torsionselastisches Element in Form einer Spiralfeder,

Fig. 5 eine Schemaskizze eines Ausführungsbeispiels, bei dem das elastische Element durch den Abgriff geteilt wird.

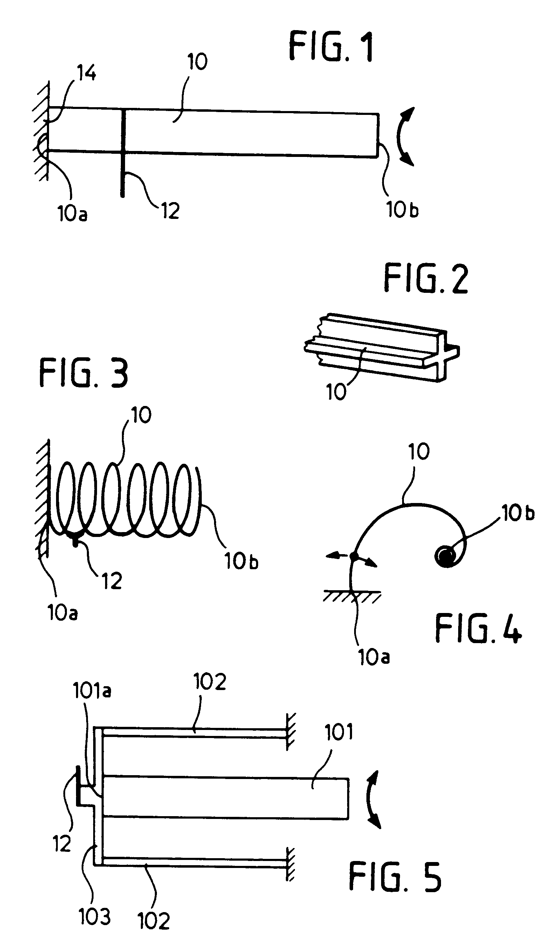

Das in Fig. 1 skizzierte Winkelsensorelement setzt sich aus einem elastischen Element 10 und einem entsprechend dem geforderten Untersetzungsverhältnis positionierten Abgriff 12 zusammen. Dieses elastische Element 10 ist mit seinem einen Ende 10a am Meßbezugsort 14 - beispielsweise am Lenkradgetriebegestänge - fest eingespannt und nimmt mit seinem freien Ende 10b die Drehbewegung auf, durch die das Element 10 auf Torsion beansprucht wird und dementsprechend dem Abgriff 12 einen bogenartigen Ausschlag vermittelt, dessen Winkel durch an sich bekannte mechanische, optische, elektrostatische etc. Einrichtungen und Verfahren abgenommen, gemessen und ausgewertet wird. Auf diese Weise ist eine spielfreie Ermittlung der aufgeprägten Drehbewegung geschaffen.

Als elastisches Element 10 für die Aufnahme von spielfreien Untersetzungen von Drehbewegungen kann ein torsionselastischer und gleichzeitig biegesteifer Torsionsstab verwendet werden. Ein Beispiel für eine Verwendungsform ist aus Figur 2 ersichtlich.

Die Figur 3 zeigt ein Ausführungsbeispiel, bei dem das elastische Element 10 als Schraubenfeder ausgebildet ist, die mit ihrem einen Ende 10a fest eingespannt und mit ihrem anderen Ende 10b freischwebend ist. Auch hier beschreibt der Abgriff 12 einen bogenartigen Ausschlag, der in vorbeschriebener Weise zur Meßwertgabe ausgewertet wird.

In dem Ausführungsbeispiel gemäß Fig. 4 dient eine Spiralfeder als elastisches Element. Die Anordnung entspricht im wesentlichen derjenigen gemäß Figur 3.

Einen - gegenüber der vorbeschriebenen Konstruktion - dreifach torsionssteifen Winkelsensor zeigt in skizzenhafter Form die Figur 5. Hier ist das elastische Element 101 mit seinem Ende 101a fest an einer starren Platte 103 aus Metall oder entsprechend belastbaren Kunststoff angebracht. Diese Platte 103 ist mit dem Abgriff 12 versehen und sitzt entweder auf zwei fest eingespannten elastischen Stab-Elementen 102 oder auf einem elastischen Zylinder. Hierbei richten sich die Abmaße, die Materialwahl und die Anordnung nach der gewünschten oder geforderten Torsionssteifigkeit.

## Patentansprüche

1. Winkelsensorelement, beispielsweise für den Lenkwinkel und dessen Kodierung bei Kraftfahrzeugen, **dadurch gekennzeichnet,** daß zur spielfreien Untersetzung der Drehbewegungen ein elastisches Element (10) mit seinem einen Ende (10a) fest eingespannt und mit seinem freien anderen Ende (10b) die Drehbewegung aufnimmt und an der durch das geforderte Untersetzungsverhältnis bestimmten Stelle ein Abgriff (12) an diesem Element angeordnet ist, dessen jeweilige Winkelposition durch mechanische, optische, elektrostatische oder andere entsprechende Einrichtungen angezeigt wird.

2. Winkelsensorelement nach Anspruch 1, **dadurch gekennzeichnet,** daß das elastische Element (10) als torsionselastischer und gleichzeitig biegesteifer Torsionsstab ausgeführt ist.

3. Winkelsensorelement nach Anspruch 1, **dadurch gekennzeichnet,** daß das elastische Element (10) als Schrauben- oder Spiralfeder ausgeführt ist.

4. Winkelsensorelement nach den Ansprüchen 1 bis 3, **dadurch gekennzeichnet,** daß das elastische Element (10) durch den Abgriff (12) geteilt wird und daß die Teile (101, 102) des elastischen Elementes (10) unterschiedlich ausgeführt sind.

## Claims

1. Angle sensor element, for example for the steering angle and its coding of motor vehicles, characterised in that, for the purpose of play-free reduction of the rotary movements, an elastic element (10) is firmly clamped with its one end (10a), and receives the rotary movement with its free other end (10b), and that a pickup (12) is placed on the element at the location determined by the required reduction ratio, the respective angle position of which is indicated by mechanical, optical, electrostatic or other respective devices.

2. Angle sensor element according to claim 1, characterised in that the elastic element (10) is a both torsionally elastic and flexurally stiff torsion rod.

3. Angle sensor element according to claim 1, characterised in that the elastic element (10) is a helical or spiral spring.

4. Angle sensor element according to claims 1 to 3, characterised in that the elastic element (10) is divided by the pick-up, and that the portions (101, 102) of the elastic element (10) are arranged to differ from each other.

## Revendications

1. Capteur d'angle, par exemple pour la mesure de l'angle de braquage et son codage dans des véhicules automobiles, caractérisé en ce que, pour la démultiplication sans jeu des mouvements de rotation, un élément élastique (10) est monté fixement par l'une de ses extrémités (10a) et reçoit par son autre extrémité (10b) libre le mouvement de rotation et un organe de sortie (12) dont la position angulaire est indiquée par des dispositifs mécaniques, optiques, électrostatiques ou autres adaptés est disposé sur ledit élément en un point déterminé par le rapport de démultiplication exigé.

2. Capteur d'angle selon la revendication 1, caractérisé en ce que l'élément élastique (10) est réalisé sous la forme d'une barre de torsion élastique en torsion et simultanément rigide en flexion.

3. Capteur d'angle selon la revendication 1, caractérisé en ce que l'élément élastique (10) est réalisé sous la forme d'un ressort hélicoïdal ou d'un ressort spiral.

4. Capteur d'angle selon les revendication 1 à 3, caractérisé en ce que l'élément élastique (10) est divisé par l'organe de sortie (12) et en ce que les parties (101, 102) de l'élément élastique sont agencées différemment.

# FIG. 1

# FIG.2

# FIG. 3

# FIG.4

# FIG. 5